# EUROPEAN PATENT APPLICATION

(11) **EP 4 804 551 A1**
(43) Date of publication of application: **09.09.2026**
(21) Application number: 24899889.0
(22) Date of filing: 05.12.2024
(51) Int. Cl.: H04N 23/68

(54) **CAMERA MODULE, ELECTRONIC DEVICE AND RELATED IMAGE STABILIZATION METHOD**

(30) Priority: 06.12.2023 CN 202311673477
(71) Applicant: Huawei Technologies Co., Ltd., Shenzhen, Guangdong 518129 (CN)
(72) Inventor: KUO, Li-Te, Shenzhen, Guangdong 518129 (CN); REN, Rong, Shenzhen, Guangdong 518129 (CN); LV, Quanming, Shenzhen, Guangdong 518129 (CN); YU, Bei, Shenzhen, Guangdong 518129 (CN)
(74) Representative: Gill Jennings & Every LLP
(86) International application number: PCT/CN2024/136954
(87) International publication number: WO 2025/119251

(57) **Abstract**

Embodiments of this application disclose a camera module, an electronic device, and a related image stabilization method. The camera module includes an image stabilization assembly, and one or more optical path elements and an imaging assembly that are sequentially arranged in a light beam transmission direction. The imaging assembly includes a first image sensor and a second image sensor. The image stabilization assembly is connected to at least one of the one or more optical path elements. The first image sensor is configured to detect a first shake amount of the camera module. The image stabilization assembly is configured to drive, based on the first shake amount, the at least one of the one or more optical path elements to perform shake compensation. The second image sensor is configured to perform optical imaging. Embodiments of this application can be used to improve optical image stabilization performance of the electronic device, to improve user experience.

## Description

This application claims priority to Chinese Patent Application No. 202311673477.1, filed with the China National Intellectual Property Administration on December 6, 2023, and entitled "CAMERA MODULE, ELECTRONIC DEVICE, AND RELATED IMAGE STABILIZATION METHOD", which is incorporated herein by reference in its entirety.

### TECHNICAL FIELD

This application relates to the field of intelligent terminal technologies, and in particular, to a camera module, an electronic device, and a related image stabilization method.

### BACKGROUND

As requirements of people for long-distance and micro-distance image shooting increase, a zoom magnification of a camera module becomes increasingly large. Large-magnification zooming requires a long effective focal length of an optical path, that is, a long-focus optical path. Such a long-focus optical path causes even a slight shake during image shooting to induce a significant shake of an imaging light beam of the camera module. Therefore, an image stabilization function of the camera module is particularly important.

### SUMMARY

Embodiments of this application provide a camera module, an electronic device, and a related image stabilization method, to improve optical image stabilization effect, so as to improve user experience.

According to a first aspect, an embodiment of this application provides a camera module. The camera module includes an image stabilization assembly, and one or more optical path elements and an imaging assembly that are sequentially arranged in a light beam transmission direction. The imaging assembly includes a first image sensor and a second image sensor. The image stabilization assembly is connected to at least one of the one or more optical path elements. The first image sensor may be configured to detect a first shake amount of the camera module. The image stabilization assembly may be configured to drive, based on the first shake amount, the at least one of the one or more optical path elements to perform shake compensation. The second image sensor may be configured to perform optical imaging.

In this embodiment of this application, an image sensor is added to the camera module to detect a real shake of the camera module, and image feedback information (that is, information collected by the added image sensor) is introduced in a process of performing shake compensation on the camera module, so that complete shake information of the camera module can be reconstructed more accurately, to improve image stabilization performance and imaging quality of the camera module.

In some embodiments, the first image sensor is specifically configured to capture a first output light beam, where the first output light beam is a light beam after an input light beam passes through the one or more optical path elements. The image stabilization assembly includes a controller and an actuator structure, and the image stabilization assembly is specifically configured to: determine the first shake amount between the input light beam and the first output light beam and determine a first shake compensation amount for the first shake amount by using the controller, and drive, by using the actuator structure, the at least one of the one or more optical path elements to perform shake compensation of the first shake compensation amount. The second image sensor is specifically configured to capture a second output light beam to obtain a first image, where the second output light beam is a light beam after the input light beam passes through the one or more optical path elements after shake compensation.

In this embodiment of this application, because the first image sensor and the second image sensor may capture light beams from a same light source, a beam shake amount determined based on the light beam captured by the first image sensor is consistent with a beam shake amount at the second image sensor. Further, the shake amount of the camera module may be determined based on the light beam captured by the first image sensor. Further, the shake compensation amount for the camera module, that is, a movement amount of an optical element in an optical image stabilization process, may be determined based on the shake amount. Then, the optical path element may be driven to perform shake compensation of the shake compensation amount, to implement optical image stabilization. When the second image sensor captures a light beam for imaging, a shake amount of the light beam can be compensated for, to improve image stabilization performance and imaging quality of the camera module.

In some embodiments, the one or more optical path elements include an optical splitting element and a lens group, the optical splitting element is located between the lens group and the imaging assembly, the first image sensor and the second image sensor in the imaging assembly are disposed on two sides of the optical splitting element, and the optical splitting element is configured to split the input light beam passing through the lens group.

In this embodiment of this application, the one or more optical path elements may further include the optical splitting element and the lens group, and the first image sensor and the second image sensor are disposed on the two sides of the optical splitting element. In other words, the first image sensor and the second image sensor may be disposed on two light exit sides of the optical splitting element. The optical splitting element may split the light beam passing through the lens group, for example, into a first light beam and a second light beam. The first light beam may be transmitted to the first image sensor, and the second light beam may be transmitted to the second image sensor. The optical splitting element is used for optical splitting, so that the first image sensor and the second image sensor can be independently designed without mutual interference while it is ensured that the first image sensor and the second image sensor capture light beams from a same light source, to improve optical image stabilization effect and imaging quality of an electronic device.

In some embodiments, the optical splitting element includes a first optical splitting surface, and the optical splitting element is specifically configured to split, by using the first optical splitting surface according to band, the input light beam passing through the lens group.

In this embodiment of this application, the optical splitting element may split, by using the first optical splitting surface according to band, the light beam passing through the lens group. For example, a light beam of a non-visible light band may be transmitted to the first image sensor, and a light beam of a visible light band may be transmitted to the second image sensor. This does not affect an amount of light entering the second image sensor while ensuring that the first image sensor can detect a shake of the imaging light beam, to improve optical image stabilization effect and imaging quality of the electronic device.

In some embodiments, the optical splitting element includes a second optical splitting surface, and the optical splitting element is specifically configured to split, by using the second optical splitting surface according to a light beam proportion, the input light beam passing through the lens group.

In this embodiment of this application, the optical splitting element may split, by using the second optical splitting surface according to a light beam proportion, the light beam passing through the lens group. For example, equal-proportion optical splitting may be performed. Alternatively, a larger proportion of light beams may be transmitted to the second image sensor, and a smaller proportion of light beams may be transmitted to the first image sensor. In other words, more light energy received by the second image sensor responsible for imaging indicates better imaging effect. A coating on the second optical splitting surface may be changed according to an actual requirement, to enable the optical splitting element to perform optical splitting according to different light beam proportions, so as to improve optical image stabilization effect and imaging quality of the electronic device.

In some embodiments, the first image sensor and the second image sensor are located on a light exit side of at least one of the one or more optical path elements, and the first image sensor is connected to the second image sensor.

In this embodiment of this application, both the first image sensor and the second image sensor may be located on the light exit side of the optical path element. The first image sensor is connected to the second image sensor. An image capture surface of the second image sensor and an image capture surface of the first image sensor may be disposed facing the optical path element, so as to further reduce a size of the camera module.

In some embodiments, the first image sensor and the second image sensor are located on a light exit side of at least one of the one or more optical path elements, and the first image sensor is embedded in the second image sensor.

In this embodiment of this application, the first image sensor is embedded in the second image sensor. To ensure imaging quality, the first image sensor may be deployed at an edge of the second image sensor, or occupy a small location in the second image sensor, so that the volume of the camera module can be further reduced.

In some embodiments, an imaging frame rate of the first image sensor is greater than an imaging frame rate of the second image sensor.

In this embodiment of this application, the imaging frame rate of the first image sensor is greater than the imaging frame rate of the second image sensor. A higher frame rate of image capture indicates a higher speed of image capture. When the imaging frame rate of the first image sensor is greater than the imaging frame rate of the second image sensor, image capture may be first performed based on an image capture region of the first image sensor, to obtain the first shake amount, and further, the image stabilization assembly may perform image stabilization on the camera module, to perform image stabilization compensation on the imaging light beam, so that an image later captured by the second image sensor is clear.

In some embodiments, the controller is configured to: obtain a second shake amount and determine the first shake compensation amount based on the first shake amount and the second shake amount.

In this embodiment of this application, the second shake amount may be obtained by using the controller, to preliminarily determine the shake amount of the camera module. In other words, a shake amount of the electronic device may be first determined as the shake amount of the camera module. Then, compensation is performed on a real shake amount of the camera module based on the imaging light beam captured by the first image sensor. In other words, the first shake amount is solved by using an imaging modality and feature of an optical path in the first image sensor, and the first shake amount may be used to compensate for a shake that is not compensated for due to an error of the second shake amount. This can reduce an error, so that complete shake information can be reconstructed more accurately, to improve image stabilization performance and imaging quality of the electronic device.

In some embodiments, the image stabilization assembly further includes a displacement sensor, the displacement sensor is connected to the actuator structure, and the image stabilization assembly is further configured to: when driving the optical path element to perform shake compensation, send location information of the optical path element to the controller by using the displacement sensor, where the location information includes linear displacement information or angular movement information of the optical path element; determine a second shake compensation amount for the optical path element based on the location information by using the controller; and drive, by using the actuator structure, the optical path element again to perform shake compensation of the second shake compensation amount.

In this embodiment of this application, when the displacement sensor participates in a shake process, the displacement sensor may be configured to feed back displacement information of the optical element in real time. When the displacement information transferred by the displacement sensor is different from a displacement amount of a first shake compensation, the actuator structure may be controlled, based on the displacement information fed back by the displacement sensor, to perform a second shake compensation, to ensure shake compensation accuracy. It may be understood that, the displacement sensor is disposed, so that the controller implements closed-loop feedback control over driving of the actuator structure. This improves accurate control of the controller over current displacement of the actuator structure, and improves image stabilization compensation accuracy.

In some embodiments, the one or more optical path elements include the lens group, the image stabilization assembly is connected to the lens group, and the image stabilization assembly is specifically configured to drive, by using the actuator structure, the lens group to perform shake compensation of the first shake compensation amount.

In this embodiment of this application, if the camera module is a vertical camera module, and the optical path element includes the lens group, the lens group may be driven to perform shake compensation, to improve image stabilization performance and imaging quality of the vertical camera module.

In some embodiments, the one or more optical path elements include an optical path folding element, the image stabilization assembly is connected to the optical path folding element, and the image stabilization assembly is specifically configured to drive, by using the actuator structure, the optical path folding element to perform shake compensation of the first shake compensation amount.

In this embodiment of this application, if the camera module is a periscope camera module, and the optical path element includes the optical path folding element, the optical path folding element may be driven to perform shake compensation, to improve image stabilization performance and imaging quality of the periscope camera module.

According to a second aspect, this application provides an electronic device. The electronic device includes the camera module according to any one of the first aspect and a first detection unit. The first detection unit is configured to determine the first shake amount based on the first output light beam captured by the first image sensor.

In this embodiment of this application, an image sensor is added to the camera module of the electronic device to detect a real shake of the camera module, and image feedback information (that is, information collected by the added image sensor) is introduced in a process of performing shake compensation on the camera module. In this way, the first detection unit in the electronic device can perform analysis based on the information fed back by the image sensor to obtain a real shake amount of the camera module, so that complete shake information of the camera module can be reconstructed more accurately, to improve image stabilization performance and imaging quality of the electronic device.

In some embodiments, the first detection unit is specifically configured to: obtain a first image set based on the first output light beam, where the first image set includes at least two frames of consecutive images; determine feature point sets of two adjacent frames of images from the first image set; establish a matching relationship between feature points in the feature point sets of the two adjacent frames of images based on the feature point sets; and determine the first shake amount based on the matching relationship.

In this embodiment of this application, an image sensor is added to the camera module to capture a light beam, convert a captured optical signal into an electrical signal, and send the electrical signal to the first detection unit. Further, the first detection unit may obtain an image set based on the signal, determine feature point sets of two adjacent frames of images based on the image set, establish a matching relationship between feature points in the feature point sets, and determine the shake amount based on the matching relationship. Another image sensor is introduced in this application, and an imaging result of the image sensor is used for shake sensing on the camera module, so that complete shake information of the camera module can be reconstructed more accurately, to improve image stabilization performance and imaging quality of the electronic device.

In some embodiments, the electronic device further includes a second detection unit, and the second detection unit is configured to: obtain a shake signal and determine the second shake amount based on the shake signal, where the shake signal includes a current angular velocity and/or a current acceleration of the electronic device, and the second shake amount includes a shake angle or shake displacement information.

In this embodiment of this application, the shake signal (which may include an angular velocity signal of the electronic device and an acceleration signal of the electronic device) may be obtained by using the second detection unit, to preliminarily identify a shake amount (namely, the second shake amount) of the camera module. In other words, the current angular velocity and/or the current acceleration of the electronic device may be preliminarily determined as the shake angle and the shake displacement information of the camera module. That is, a shake amount of the electronic device may be determined as the shake amount of the camera module, to improve image stabilization performance and imaging quality of the electronic device.

According to a third aspect, an image stabilization method is provided, and is applied to an electronic device. The electronic device includes a camera module. The camera module includes an image stabilization assembly, and one or more optical path elements and an imaging assembly that are sequentially arranged in a light beam transmission direction. The imaging assembly includes a first image sensor and a second image sensor. The image stabilization assembly is connected to at least one of the one or more optical path elements. The method includes: detecting a first shake amount of the camera module by using the first image sensor; driving, by using the image stabilization assembly based on the first shake amount, the at least one of the one or more optical path elements to perform shake compensation; and performing optical imaging by using the second image sensor.

In some embodiments, the image stabilization assembly includes a controller and an actuator structure. Detecting the first shake amount of the camera module by using the first image sensor includes: capturing a first output light beam by using the first image sensor, where the first output light beam is a light beam after an input light beam passes through the one or more optical path elements; and determining the first shake amount between the input light beam and the first output light beam and determining a first shake compensation amount for the first shake amount by using the controller. Driving, by using the image stabilization assembly based on the first shake amount, the at least one of the one or more optical path elements to perform shake compensation includes: driving, by using the actuator structure, the at least one of the one or more optical path elements to perform shake compensation of the first shake compensation amount. Performing optical imaging by using the second image sensor includes: capturing a second output light beam to obtain a first image by using the second image sensor, where the second output light beam is a light beam after the input light beam passes through the one or more optical path elements after shake compensation.

In some embodiments, the electronic device further includes a first detection unit, and determines the first shake amount by using the first detection unit based on the first output light beam captured by the first image sensor.

In some embodiments, determining the first shake amount by using the first detection unit based on the first output light beam captured by the first image sensor includes: obtaining a first image set based on the first output light beam, where the first image set includes at least two frames of consecutive images; determining feature point sets of two adjacent frames of images from the first image set; establishing a matching relationship between feature points in the feature point sets of the two adjacent frames of images based on the feature point sets; and determining the first shake amount based on the matching relationship.

In some embodiments, the electronic device further includes a second detection unit, and obtains a shake signal and determines a second shake amount based on the shake signal by using the second detection unit, where the shake signal includes a current angular velocity and/or a current acceleration of the electronic device, and the second shake amount includes a shake angle or shake displacement information.

In some embodiments, determining the first shake compensation amount for the first shake amount includes: obtaining the second shake amount and determining the first shake compensation amount based on the first shake amount and the second shake amount by using the controller.

According to a fourth aspect, an electronic device is provided, and includes a memory and one or more processors. The memory is coupled to the one or more processors, the memory is configured to store computer program code, the computer program code includes computer instructions, and the one or more processors invoke the computer instructions to enable the electronic device to perform the method according to the third aspect or any one of the implementations of the third aspect.

According to a fifth aspect, a computer-readable storage medium is provided, and includes instructions. When the instructions are run on an electronic device, the electronic device is enabled to perform the method according to the third aspect or any one of the implementations of the third aspect.

According to a sixth aspect, a computer program product is provided. When the computer program product is run on a computer, the computer is enabled to perform the method according to the third aspect or any one of the implementations of the third aspect.

According to a seventh aspect, a chip system is provided. The chip system includes at least one processor, configured to implement the method according to the third aspect or any one of the implementations of the third aspect.

### BRIEF DESCRIPTION OF DRAWINGS

FIG. 1 is a diagram of a structure of an electronic device 1000 in an implementation according to an embodiment of this application;
FIG. 2 is a partial sectional view of the electronic device 1000 shown in FIG. 1 along a line A-A in an implementation;
FIG. 3 is a partial exploded view of a camera module 100 shown in FIG. 2 in an implementation;
FIG. 4A and FIG. 4B are diagrams of an optical splitting path according to an embodiment of this application;
FIG. 5 is a diagram of two adjacent frames of images according to an embodiment of this application;
FIG. 6 is a diagram of determining a shake compensation amount for an optical path folding element according to an embodiment of this application;
FIG. 7 is a diagram in which an optical path folding element performs shake compensation according to an embodiment of this application;
FIG. 8 is an exploded view of a partial structure of a camera module 100 shown in FIG. 2 in another implementation;
FIG. 9 is another assembly diagram of different image sensors according to an embodiment of this application;
FIG. 10 is still another assembly diagram of different image sensors according to an embodiment of this application;
FIG. 11 is a diagram of a structure of a camera module 100 shown in FIG. 2 in another implementation; and
FIG. 12 is a diagram of a structure of the camera module 100 shown in FIG. 11 in another implementation.

### DESCRIPTION OF EMBODIMENTS

The following describes embodiments of this application with reference to the accompanying drawings in embodiments of this application.

In the specification, claims, and accompanying drawings of this application, the terms "first", "second", "third", "fourth", and the like are intended to distinguish between different objects but do not indicate a particular sequence. In addition, the terms "include" and "have" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another step or unit inherent to the process, the method, the product, or the device.

An "embodiment" mentioned in the specification indicates that a particular feature, structure, or characteristic described with reference to the embodiment may be included in at least one embodiment of this application. The word shown in various locations in the specification may not necessarily refer to a same embodiment, and is not an independent or optional embodiment exclusive from another embodiment. It is explicitly and implicitly understood by a person skilled in the art that embodiments described in the specification may be combined with another embodiment.

In the descriptions of embodiments of this application, it should be noted that the term "connection" should be understood in a broad sense, unless otherwise specified or limited expressly. For example, the "connection" may be detachable connection or non-detachable connection, or may be direct connection or indirect connection through an intermediate medium. "Fastened" means that parts are connected to each other and a relative location relationship remains unchanged after the parts are connected to each other. It should be understood that when a component A is fastened to a component C through a component B, a change in a relative location relationship caused by deformation of the component A, the component B, and the component C is allowed.

The following describes embodiments of this application with reference to the accompanying drawings in embodiments of this application.

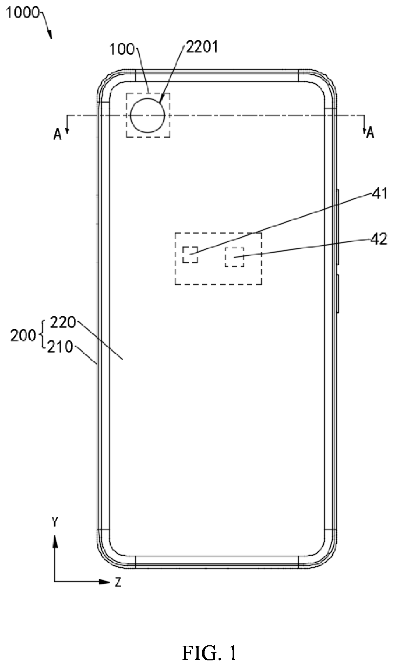

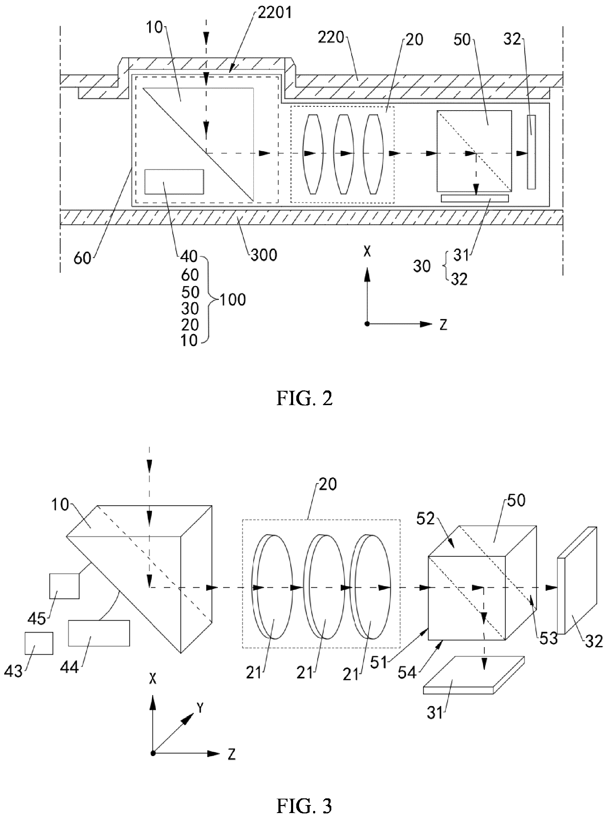

FIG. 1 is a diagram of a structure of an electronic device 1000 in an implementation according to an embodiment of this application. FIG. 2 is a partial sectional view of the electronic device 1000 shown in FIG. 1 along a line A-A in an implementation.

As shown in FIG. 1 and FIG. 2, the electronic device 1000 may be a device with an image shooting function, such as a mobile phone, a tablet computer (tablet personal computer), a laptop computer (laptop computer), a personal digital assistant (personal digital assistant, PDA), a camera, a personal computer, a notebook computer, a vehicle-mounted device, a video surveillance device, a wearable device, augmented reality (augmented reality, AR) glasses, an AR helmet, virtual reality (virtual reality, VR) glasses, or a VR helmet. The electronic device 1000 in the embodiment shown in FIG. 1 is described by using the mobile phone as an example.

The electronic device 1000 includes a camera module 100, a housing 200, and a screen 300. The camera module 100 may be a rear-facing camera module 100, or may be a front-facing camera module 100. In this application, an example in which the camera module 100 is the rear-facing camera module 100 is used for description. It should be noted that FIG. 1, FIG. 2, and related accompanying drawings below merely show some components included in the electronic device 1000 as an example. Actual shapes, actual sizes, actual locations, and actual structures of the components are not limited by FIG. 1, FIG. 2, or the accompanying drawings below. In another embodiment, when the electronic device 1000 is a device in another form, the electronic device 1000 may not include the screen 300.

For ease of description, a thickness direction of the electronic device 1000 is defined as an X axis, a length direction of the electronic device 1000 is defined as a Y axis, and a width direction of the electronic device 1000 is defined as a Z axis. It may be understood that a coordinate system of the electronic device 1000 may be flexibly set according to a specific actual requirement.

In this implementation, the housing 200 may include a side frame 210 and a rear cover 220. The rear cover 220 is fastened to the side frame 210. For example, the rear cover 220 may be fastened to the side frame 210 through an adhesive. The rear cover 220 and the side frame 210 may alternatively be an integrally formed structure. In other words, the rear cover 220 and the side frame 210 are an integral structure.

In addition, the screen 300 may be located on a side that is of the side frame 210 and that is away from the rear cover 220. In this case, the screen 300 and the rear cover 220 are located on two sides of the side frame 210 respectively. The screen 300, the side frame 210, and the rear cover 220 jointly enclose the inside of the electronic device 1000. The inside of the electronic device 1000 may be used for placement of a component of the electronic device 1000, for example, a battery, a receiver, or a microphone.

In this implementation, the screen 300 may be configured to display an image and the like. The screen 300 may be a flat screen or a curved screen. A display of the screen 300 may be an organic light-emitting diode (organic light-emitting diode, OLED) display, an active-matrix organic light-emitting diode (active-matrix organic light-emitting diode, AMOLED) display, a liquid crystal display (liquid crystal display, LCD), or the like.

For example, the camera module 100 may be located inside the electronic device 1000. The camera module 100 may be fastened to a side that is of the screen 300 and that faces the rear cover 220. The rear cover 220 may be provided with a light transmission hole 2201. A shape of the light transmission hole 2201 is not limited to a circle shown in FIG. 1. The light transmission hole 2201 connects the inside of the electronic device 1000 to the outside of the electronic device 1000. Light outside the electronic device 1000 may enter the electronic device 1000 through the light transmission hole 2201. The camera module 100 may capture ambient light that enters the electronic device 1000.

For example, the camera module 100 may be a common camera module 100 (that is, an optical axis direction of the camera module 100 is the thickness direction of the electronic device 1000, that is, an X-axis direction). In some implementations, the camera module 100 may alternatively be a periscope camera module 100 (that is, an optical axis direction of the camera module 100 may be any direction on a Y-Z plane).

FIG. 3 is a partial exploded view of the camera module 100 shown in FIG. 2 in an implementation. The camera module 100 in FIG. 3 is described by using the periscope camera module as an example. The optical axis direction of the camera module 100 is parallel to a Z-axis direction.

As shown in FIG. 2 and FIG. 3, the camera module 100 may include an optical path folding element 10, a lens group 20, an imaging assembly 30, an image stabilization assembly 40, and a housing 60. The optical path folding element 10 and the lens group 20 may be a plurality of optical elements in the camera module 100. The optical path folding element 10 is an optical element of the camera module 100. The lens group 20 is an optical element of the camera module 100. The optical path folding element 10, the lens group 20, and the imaging assembly 30 are sequentially arranged in a transmission direction of an imaging light beam (namely, an input light beam) (a propagation direction of the imaging light beam is shown by using dashed lines and arrows in FIG. 2 and FIG. 3). The imaging light beam is a light beam formed by light incident to the camera module 100. For example, as shown in FIG. 1, the electronic device 1000 may further include a main control chip (which may also be referred to as a system on chip), and the main control chip may include a detection structure 41 and a detection structure 42. The detection structure 41 and the detection structure 42 may be one calculation unit on the main control chip of the electronic device 1000, or may be different calculation units on the main control chip. For example, both the detection structure 41 and the detection structure 42 may be central processing units (Central Processing Units, CPUs) of the electronic device 1000.

As shown in FIG. 3, the image stabilization assembly 40 may include a controller 43, an actuator structure 44, and a displacement sensor 45. The image stabilization assembly 40 may be connected to at least one of the optical path folding element 10, the lens group 20, and an image sensor 32, to perform shake compensation on the imaging light beam.

For example, light outside the electronic device 1000 may first enter the optical path folding element 10, then enter the lens group 20, and be transmitted to the imaging assembly 30 after passing through the lens group 20. In some implementations, the controller 43 may drive the actuator structure 44 to move the optical path folding element 10, to implement image stabilization compensation.

In some embodiments, the electronic device 1000 may include the main control chip, and a drive chip in the actuator structure 44 may exchange data with the main control chip.

In some embodiments, the detection structure 41 may be referred to as a first detection unit, and the detection structure 42 may be referred to as a second detection unit.

The optical path folding element 10 may be configured to: fold an optical path of the imaging light beam entering the camera module 100, and then transmit the imaging light beam to the lens group 20. Optical path folding is also referred to as optical path turning, and means changing a transmission path of light. For example, the optical path folding element 10 may be a reflection element such as a prism or a reflector.

The lens group 20 may include one lens 21, or may include a plurality of lenses 21 (three lenses 21 are shown in FIG. 3). The lens group 20 may be configured to perform specific processing on the received imaging light beam, for example, aberration correction, achromatic processing, or other processing.

The imaging light beam is transmitted to the imaging assembly 30 after passing through the lens group 20. The imaging assembly 30 includes an image sensor 31 and the image sensor 32.

In some embodiments, the image sensor 31 may be referred to as a second image sensor, and the image sensor 32 may be referred to as a first image sensor.

The image sensor 31 may have an image capture region, and capture a received imaging light beam by using the image capture region (also referred to as a photosensitive region or a photosensitive surface). The image sensor 31 may convert an optical signal of the imaging light beam captured in the image capture region into an electrical signal that is correspondingly proportional to the optical signal. For example, the image sensor 31 may be a hybrid image sensor, a CCD image sensor including a charge-coupled device (charge-coupled device, CCD), or a CMOS image sensor including a complementary metal oxide semiconductor (complementary metal oxide semiconductor, CMOS). In some implementations, the image sensor 31 may perform conversion into the electrical signal based on the imaging light beam in the photosensitive region of the image sensor 31, the electrical signal is transmitted to the screen 300 of the electronic device 1000, and finally an image is formed on the screen 300 of the electronic device 1000. In other words, the electrical signal obtained through conversion based on the imaging light beam on the image sensor 31 is used as an image captured by the camera module 100.

In some embodiments, the image sensor 32 may be spaced from the image sensor 31. The image sensor 32 may have an image capture region, and capture a received imaging light beam by using the image capture region (also referred to as a photosensitive region or a photosensitive surface). The image sensor 32 may convert an optical signal of the imaging light beam captured in the image capture region into an electrical signal that is correspondingly proportional to the optical signal.

For example, the image sensor 32 may be a hybrid image sensor, a DVS event image sensor, a spiking vision perception sensor, a charge-coupled device (charge-coupled device, CCD) image sensor, or a complementary metal oxide semiconductor (complementary metal oxide semiconductor, CMOS) image sensor. The image sensor 32 may provide image shake detection, to perform image stabilization compensation. Specifically, the detection structure 41 may detect, based on the light beam captured by the image sensor 32, whether the imaging light beam in the photosensitive region of the image sensor 32 shakes.

As shown in FIG. 3, in some implementations of the image sensor 32 and the image sensor 31, one or more optical path elements of the camera module 100 may further include an optical splitting element 50, and the optical splitting element 50 may be located in the propagation direction of the imaging light beam, and may be located between the image sensor 32 and the lens group 20. The optical splitting element 50 is configured to split the imaging light beam passing through the lens group 20 into two parts. One part is transmitted to the image capture region of the image sensor 31, and the other part is transmitted to the image capture region of the image sensor 32.

It may be understood that, the optical splitting element 50 is used for optical splitting, so that the image sensor 32 and the image sensor 31 can be independently designed without mutual interference while it is ensured that the image sensor 32 and the image sensor 31 capture light beams from a same light source, to improve optical image stabilization effect and imaging quality of the electronic device.

In some embodiments, the optical splitting element 50 may include a first optical splitting surface, and the optical splitting element 50 may split, by using the first optical splitting surface according to band, the imaging light beam passing through the lens group 20.

Specifically, the optical splitting element 50 may split the passing light beam by using the first optical splitting surface according to band, the first optical splitting surface may be a cold mirror, and a material such as SiO₂, Ta₂O₅, or Ti₃O₅ may be used as a coating. For example, a light beam of a non-visible light band may be transmitted to the image sensor 32, and a light beam of a visible light band may be transmitted to the image sensor 31. This does not affect an amount of light entering the image sensor 31 while ensuring that the image sensor 32 can detect a shake of the imaging light beam, to improve optical image stabilization effect and imaging quality of the electronic device.

It should be noted that, in this embodiment of this application, because the cold mirror may be used as the first optical splitting surface, a light beam may be directly transmitted to the image sensor 31 after the imaging light beam is split by the optical splitting element 50, with no need to dispose an infrared filter between the optical splitting element 50 and the image sensor 31 for additional light filtering. This can reduce a size of the camera module 100, to improve user experience.

In some embodiments, the optical splitting element 50 may include a second optical splitting surface, and the optical splitting element 50 may split, by using the second optical splitting surface according to a light beam proportion, the imaging light beam passing through the lens group 20.

Specifically, the optical splitting element 50 may split, by using the second optical splitting surface according to a light beam proportion, the light beam passing through the lens group 20, and the second optical splitting surface may be a dielectric beam splitting film. Different dielectric beam splitting films may be used for equal-proportion optical splitting. Alternatively, a larger proportion of light beams may be transmitted to the image sensor 31, and a smaller proportion of light beams may be transmitted to the image sensor 32. In other words, more light energy received by the image sensor 31 responsible for imaging indicates better imaging effect. A coating on the second optical splitting surface may be changed according to an actual requirement, to enable the optical splitting element 50 to perform optical splitting according to different light beam proportions, so as to improve optical image stabilization effect and imaging quality of the electronic device.

It should be noted that, the coating on the first optical splitting surface is different from that on the second optical splitting surface, and optical splitting effect varies with the coating on the optical splitting surface.

For example, an RGB band included in visible light of the imaging light beam is separated and transmitted to the image sensor 31, and an IR band included in the imaging light beam is transmitted to the image sensor 32. In another implementation, the optical splitting element 50 may alternatively perform optical splitting according to a proportion. For example, 90% of visible light of the imaging light beam is separated and transmitted to the image sensor 31, and 10% of visible light is transmitted to the image sensor 32.

In some embodiments, the optical splitting element 50 may be located between an optical path element and the imaging assembly 30, for example, between the lens group 20 and the imaging assembly 30. The image sensor 32 and the image sensor 31 in the imaging assembly 30 are disposed on two sides of the optical splitting element 50. The optical splitting element 50 may be configured to split the imaging light beam passing through the lens group 20. For light beams after optical splitting, a length of an optical splitting path to the image sensor 31 is less than or equal to a length of an optical splitting path to the image sensor 32. The optical splitting path includes an internal path of the optical splitting element 50 and a path from the optical splitting element 50 to the imaging assembly 30.

For example, the optical splitting element 50 includes an incoming surface 51, an optical splitting surface 52, a first exit surface 53, and a second exit surface 54. The image sensor 31 is disposed opposite to the second exit surface 54, and the image sensor 32 is disposed opposite to the first exit surface 53. The imaging light beam first enters the optical splitting element 50 through the incoming surface 51, reaches the optical splitting surface 52, and is split, by the optical splitting surface 52, into two parts: a first light beam and a second light beam. The first light beam and the second light beam are at an angle to each other. The first light beam exits from the optical splitting element 50 through the first exit surface 53, and is transmitted to the image sensor 32. The second light beam exits from the optical splitting element 50 through the second exit surface 54, and is transmitted to the image sensor 31. In some implementations, the optical splitting element 50 may be a triangular transmission prism.

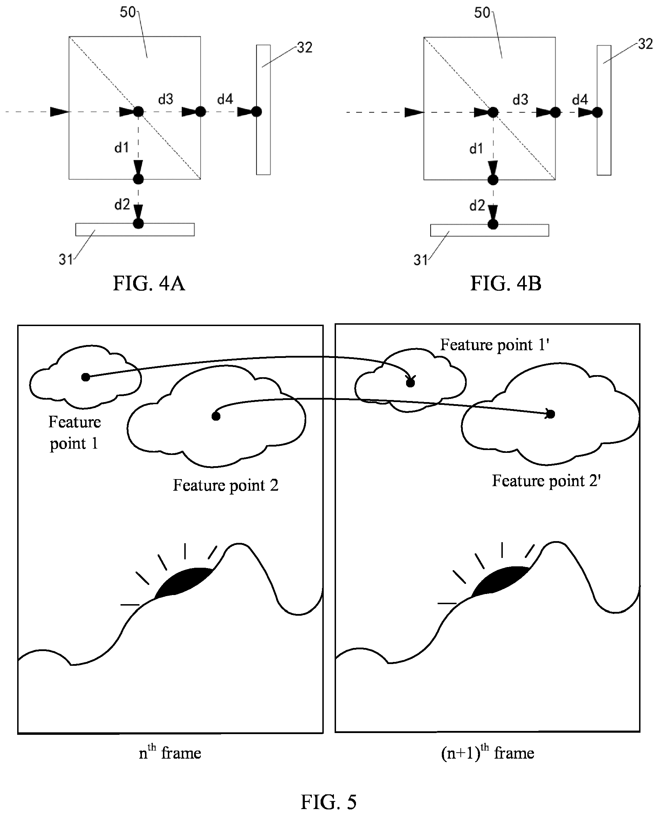

In some embodiments, FIG. 4A and FIG. 4B are diagrams of an optical splitting path according to an embodiment of this application. In the figure, after passing through the lens group 20, the imaging light beam is split by the optical splitting element 50 into a first light beam and a second light beam. The first light beam is transmitted to the image sensor 32, and a light beam transmission path D1 includes an internal path d1 of the optical splitting element 50 and a path d2 from the optical splitting element 50 to the image sensor 32. The second light beam is transmitted to the image sensor 31, and a light beam transmission path D2 includes an internal path d3 of the optical splitting element 50 and a path d4 from the optical splitting element 50 to the image sensor 31. In some embodiments, the first light beam and the second light beam pass through same transmission media. In other words, the optical splitting element 50 has a same transmission medium inside, and transmission media from the optical splitting element 50 to different image sensors are the same. Therefore, when it is ensured that a length of the light beam transmission path D1 is less than or equal to a length of the light beam transmission path D2, for example, the length of the light beam transmission path D1 is equal to the length of the light beam transmission path D2 in FIG. 4A or the length of the light beam transmission path D1 is less than the length of the light beam transmission path D2 in FIG. 4B, it can be ensured that the first light beam can reach the image sensor 32 simultaneously or more quickly, so that a shake amount of the light beam captured by the image sensor 32 is closer to or equal to a shake amount of the light beam captured by the image sensor 31 (that is, the shake amount of the light beam captured by the image sensor 31 is a real shake amount of the camera module 100), to ensure optical sharing. Further, shake compensation is performed based on the light beam captured by the image sensor 32, to achieve better image stabilization effect, so as to improve user experience.

In some embodiments, image sensors 32 with different areas may be properly selected according to an actual requirement. Generally, an area of the image sensor 32 may be less than or equal to an area of the image sensor 31. A larger area of the image sensor 32 indicates better imaging effect and a smaller error between an obtained first shake amount and the real shake amount of the camera module 100. In embodiments of this application, the image sensor 32 does not participate in imaging, and may be flexibly selected, to ensure optical sharing with the image sensor 31. This can reduce a calculation error introduced by a parallax, and can also effectively reduce power consumption.

The detection structure 41 may be electrically connected to the image sensor 32. The detection structure 41 may be configured to measure whether an image on the imaging assembly 30 shakes, to obtain a first shake amount. For example, the detection structure 41 may be configured to measure whether there is a shake in imaging on the image sensor 32.

In some embodiments, the imaging assembly 30 captures a first output light beam by using the image sensor 32. The first output light beam is a light beam after the input light beam (namely, the imaging light beam) sequentially passes through the optical path elements, for example, a light beam passing through the optical path folding element 10 and the lens group 20. Further, the detection structure 41 may receive an electrical signal sent by the image sensor 32. The electrical signal is obtained through conversion from an optical signal of the first output light beam captured by the image sensor 32. The detection structure 41 may obtain a first image set based on the first output light beam captured by the image sensor 32. The first image set includes at least two frames of consecutive images.

For example, when a user uses the electronic device 1000 to shoot a distant scene, the user shakes the electronic device 1000 during image shooting, and consequently, the camera module 100 shakes during image shooting. To avoid a blurring problem during image shooting caused by a shake, the image sensor 32 is added in this application. Before the image sensor 31 performs imaging, the image sensor 32 is used to capture an imaging light beam, to obtain the first image set. The first image set may include a plurality of consecutive images, for example, n+2 images, and the n+2 images are arranged in an imaging sequence. In other words, a first frame of image is obtained through imaging for the first time, and a second frame of image is obtained through imaging for the second time.

In some embodiments, the image sensor 32 may be configured as an image sensor that independently outputs information. The image sensor 32 may be a small-sized sensor, and may capture only a partial field of view, for example, may capture only an image of a partial region.

In some embodiments, the detection structure 41 determines feature point sets of two adjacent frames of images from the first image set; establishes a matching relationship between feature points in the feature point sets of the two adjacent frames of images based on the feature point sets; and may determine the first shake amount based on the matching relationship. The first shake amount may include pixel displacement between the two adjacent frames of images.

Specifically, as shown in FIG. 5, two adjacent frames of images may be an n^{th} frame of image and an (n+1)^{th} frame of image. First, feature point sets of the two adjacent frames of images may be obtained. For example, the feature point set of the n^{th} frame of image is S1, and the feature point set of the (n+1)^{th} frame of image is S2. The feature point set S1 may include a plurality of feature points (for example, a feature point 1 and a feature point 2). The feature point set S2 may also include a plurality of corresponding feature points (for example, a feature point 1' and a feature point 2'). Further, a matching relationship between feature points in the feature point set S1 and the feature point set S2 may be established based on the feature points. Then, pixel displacement d between the two adjacent frames of images may be solved according to the matching relationship between the feature points, to determine the first shake amount. Another image sensor is introduced in this application, and an imaging result of the image sensor is used for shake sensing on the camera module 100. This supplements a control solution in which a cumulative error of a hardware sensor cannot be sensed, so that complete shake information can be reconstructed more accurately, to improve image stabilization performance and imaging quality of the camera module 100.

In some embodiments, the image stabilization assembly 40 may determine a first compensation angle for the optical path folding element 10 based on the first shake amount and determine a first shake compensation amount based on the first compensation angle by using the controller 43.

Specifically, the first compensation angle may be understood as an angle by which an optical path element, for example, the optical path folding element 10 or the lens group 20, needs to rotate around the X axis or the Y axis, and may be represented by *θᵢ*. *θᵢ* may be obtained according to Formula 1. Formula 1 is as follows: ${θ}_{i} = arctan \left(\frac{di}{efl}\right)$

i represents a yaw axis (corresponding to the X axis in FIG. 3) or a tilt axis (corresponding to the Y axis in FIG. 3), and efl represents an equivalent focal length.

In some embodiments, the detection structure 42 may be fastened to the housing 60 (not shown in the figure) of the camera module 100. The detection structure 42 may be configured to detect whether the electronic device 1000 shakes, to obtain a second shake amount. For example, the second shake amount may include an angular velocity and/or an acceleration of the camera module 100. The detection structure 42 may be an angular velocity meter and/or an accelerometer of the electronic device 1000.

The controller 43 is electrically connected to the detection structure 41, the detection structure 42, the displacement sensor 45, and the actuator structure 44. The controller 43 may be configured to: obtain the first shake amount based on a captured image of the detection structure 41, obtain the second shake amount based on data of the detection structure 42, obtain a shake compensation amount through calculation based on the first shake amount and the second shake amount, and drive the actuator structure 44 to perform shake compensation.

In some embodiments, a shake signal may be obtained by using the detection structure 42, to obtain the second shake amount, where the shake signal includes a current angular velocity and/or a current acceleration of the camera module 100; and the first shake compensation amount is determined based on the first shake amount and the second shake amount by using the controller 43.

Specifically, the shake signal obtained by the detection structure 42 may include a current angular velocity detected by using the angular velocity meter of the electronic device 1000 and a current acceleration detected by using the accelerometer of the electronic device 1000. In this embodiment of this application, the shake signal (which may include an angular velocity signal of the electronic device 1000 and an acceleration signal of the electronic device 1000) may be obtained by using the detection structure 42, to preliminarily identify a shake amount (namely, the second shake amount) of the camera module 100. In other words, a shake amount of the electronic device 1000 may be determined as the shake amount of the camera module 100. Then, the detection structure 41 is used to perform compensation on the real shake amount of the camera module 100 based on the imaging light beam captured by the image sensor 32. In other words, the first shake amount is calculated by using an imaging modality and feature of an optical path in the image sensor 32, and the first shake amount may be used to compensate for a shake that is not compensated for due to an error of the second shake amount. This can reduce an error, so that complete shake information can be reconstructed more accurately, to improve image stabilization performance and imaging quality of the camera module 100.

In some embodiments, the detection structure 42 may determine the second shake amount based on the current angular velocity and/or the current acceleration of the electronic device 1000.

Specifically, a shake angle may be calculated based on a gyroscope. θ = ∫(*f_{g}, gyro*), where *f_{g}* represents a gyroscope data filtering function. When there is a slight shake, displacement of the camera module 100 may be approximated by using a small angle. That is, *L* = *R* * *Tan*(*θ*) ≈ *R* * θ *= R* * ∫(*f_{g}*,*gyro*). Displacement information of the camera module 100 may be obtained by using the accelerometer. L'= ∫(*fₐ, acc*), where *fₐ* represents an accelerometer data filtering function. Because L=L', that is, *R* * ∫(*f_{g}, gyro)* = ∫(*fₐ, acc*), a rotation radius may be obtained as follows: $R = \frac{{V}_{acc}}{gyro} = \frac{\int \left({f}_{a}, acc\right)}{{f}_{g} \left(gyro\right)}$. The second shake amount ${θ}_{i} = {θ}_{i}^{Rot} + {θ}_{i}^{Shift}$ , where ${θ}_{i}^{Rot}$ represents a compensation amount brought by rotation, ${θ}_{i}^{Rot} = \int \left({f}_{g}, gyro\right) , {θ}_{i}^{Shift}$ represents a compensation amount brought by rotation center translation, ${θ}_{i}^{Shift} = \frac{∬ \left({f}_{a}, acc\right)}{R}$, and i represents the yaw axis or the tilt axis. In this embodiment of this application, the shake signal (which may include the angular velocity signal and the acceleration signal) may be obtained by using the detection structure 42, to preliminarily identify the shake amount (namely, the second shake amount) of the camera module 100. Then, the detection structure 41 is used to perform compensation on the real shake amount of the camera module 100 based on the imaging light beam captured by the image sensor 32. In other words, the first shake amount is calculated by using the imaging modality and feature of the optical path in the image sensor 32, and the first shake amount is used to compensate for the shake that is not compensated for due to the error of the second shake amount. This can reduce an error, so that complete shake information can be reconstructed more accurately, to improve image stabilization performance and imaging quality of the camera module 100.

In some embodiments, the image stabilization assembly 40 may determine a second compensation angle for the optical path element based on the second shake amount and fuse the first compensation angle and the second compensation angle to obtain the first shake compensation amount by using the controller 43.

Specifically, the first compensation angle may be determined based on the first shake amount, and the second compensation angle may be determined based on the second shake amount. Because the first compensation angle and the second compensation angle have a same physical meaning, compensation fusion may be performed in a superposition manner. Optionally, time alignment is performed on the first compensation angle and the second compensation angle, so that complete shake information can be reconstructed more accurately, to improve image stabilization performance and imaging quality of the camera module 100.

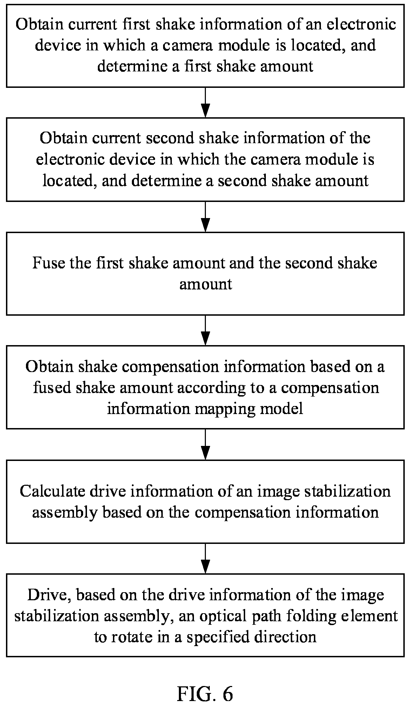

For example, FIG. 6 is a diagram of determining a shake compensation amount for the optical path folding element according to an embodiment of this application. In the figure, current first shake information of the electronic device in which the camera module is located may be first obtained, and the first shake amount is determined, where the first shake amount is obtained by the detection structure 41, that is, ${θ}_{i}^{2}$, and i=1 or 2, respectively representing the yaw axis or the tilt axis. Current second shake information of the electronic device in which the camera module is located is obtained, and the second shake amount is determined, where the second shake amount is ${θ}_{i}^{1}$, that is, ${θ}_{i}^{1} = {\int }_{t 0}^{t 1} {ω}_{i}$, and i=1 or 2, respectively representing the yaw axis or the tilt axis. The first shake amount and the second shake amount are fused, where a compensation amount obtained through fusion is ${θ}_{i} = - \left({θ}_{i}^{1}+{θ}_{i}^{2}\right)$, the negative sign may indicate to rotate the optical path folding element 10 in an opposite direction, a rotation magnitude is ${θ}_{i}^{1} + {θ}_{i}^{2}$, and i=1 or 2, respectively representing the yaw axis or the tilt axis. Shake compensation information may be obtained based on a fused shake amount according to a compensation information mapping model. Drive information of the image stabilization assembly is calculated based on the compensation information. The optical path folding element is driven, based on the drive information of the image stabilization assembly, to rotate in a specified direction.

In an image stabilization scenario of the periscope camera module 100 in embodiments of this application, the image sensor 32 is added to participate in shake detection, to supplement a control solution in which an error caused by a hardware sensor (for example, a gyroscope, an accelerometer, or a location sensor) cannot be sensed. In comparison with some image stabilization algorithms, image feedback information is introduced into an image stabilization link, to correct and calibrate the error of the sensor (that is, correct a cumulative error of an image stabilization system). In this way, complete shake information can be reconstructed more accurately, the cumulative error of the sensor is reduced, and a maximum exposure duration for obtaining a clear image is extended, to improve image stabilization performance and imaging quality of the electronic device.

The actuator structure 44 is connected to at least one of the optical path folding element 10 and the lens group 20. In other words, the actuator structure 44 may be connected to any one of the optical path folding element 10 and the lens group 20, or may be connected to two or more structures of the optical path folding element 10 and the lens group 20. In the periscope camera module, the actuator structure 44 may be connected to the optical path folding element 10. In a vertical camera module, the actuator structure 44 may be connected to the lens group 20. The actuator structure 44 may be configured to drive the at least one of the optical path folding element 10 and the lens group 20 to move to perform shake compensation. When the actuator structure 44 drives the two or more structures of the optical path folding element 10 and the lens group 20 to move, the actuator structure 44 may include a plurality of actuator sub-units, and the plurality of actuator sub-units are configured to move different structures respectively.

In some implementations, the actuator structure 44 may be a motion motor. For example, the actuator structure 44 may include structures such as a support, a magnet, an elastic support component, and a circuit component.

The displacement sensor 45 may be connected to the actuator structure 44 or a structure driven by the actuator structure 44. The displacement sensor 45 is configured to send a current displacement feedback signal of the displacement sensor 45 to the controller 43 when the actuator structure 44 drives a structure such as the optical path folding element 10 or the lens group 20 to perform image stabilization. It may be understood that there may be one or more displacement sensors 45. When the actuator structure 44 moves a plurality of structures to perform image stabilization, displacement sensors 45 may be correspondingly disposed on the plurality of structures. In this way, the controller 43 can acquire displacement information of all structures in the camera module 100. For example, the displacement sensor 45 may include at least one of a linear displacement sensor 45 and an angular displacement sensor 45. The linear displacement sensor 45 is configured to feed back linear displacement information of the linear displacement sensor 45 in a moving process to the controller 43. The angular displacement sensor 45 is configured to feed back angular movement information of the angular displacement sensor 45 in a moving process to the controller 43.

In some embodiments, when the optical path element is driven to perform shake compensation, location information of the optical path element is sent to the controller 43 by using the displacement sensor 45, where the location information includes linear displacement information or angular movement information of the optical path element. A second shake compensation amount for the optical path element is determined based on the location information by using the controller 43. The optical path element is driven, by using the actuator structure 44, again to perform shake compensation of the second shake compensation amount.

For example, in the periscope camera module, the optical path element includes the optical path folding element 10. When the actuator structure 44 drives the optical path folding element 10 to perform shake compensation, location information of the optical path folding element 10 may be sent to the controller 43 by using the displacement sensor 45, where the location information may include linear displacement information or angular movement information of the optical path folding element 10. A second shake compensation amount for the optical path folding element 10 is determined based on the location information by using the controller 43. The optical path folding element 10 is driven, by using the actuator structure 44, again to perform shake compensation of the second shake compensation amount.

For example, the following specifically describes an image stabilization process of the camera module 100 by using an example in which the actuator structure 44 is connected to the optical path folding element 10 and drives the optical path folding element 10 to perform image stabilization.

When the image stabilization assembly 40 performs image stabilization compensation on the camera module 100, the controller 43 obtains a shake compensation amount through calculation based on the obtained first shake amount and second shake amount, then the controller 43 controls the actuator structure 44, and the actuator structure 44 drives the optical path folding element 10 to move based on the shake compensation amount, to perform shake compensation on the imaging light beam. The actuator structure 44 may drive, based on a shake direction, the optical path folding element 10 to rotate around an axis, to perform a first shake compensation on the imaging light beam. For example, when the shake direction of the imaging light beam received by the camera module 100 is an X-axis clockwise direction, the actuator structure 44 drives the optical path folding element 10 to move clockwise around the X axis. When the shake direction of the imaging light beam received by the camera module 100 is a Y-axis clockwise direction, the actuator structure 44 drives the optical path folding element 10 to move clockwise around the Y axis.

When the displacement sensor 45 participates in a shake process, and the actuator structure 44 is connected to the optical path folding element 10 for control, the displacement sensor 45 may be fastened to the optical path folding element 10. In the image stabilization process, the displacement sensor 45 is configured to feed back displacement information of the optical path folding element 10 in real time. When the displacement information transferred by the displacement sensor 45 is different from a displacement amount of the first shake compensation, the controller 43 may control, based on the displacement information fed back by the displacement sensor 45, the actuator structure 44 to perform a second shake compensation, to ensure shake compensation accuracy. For example, when a difference between the displacement information fed back by the displacement sensor 45 and the shake compensation amount is a positive value, the controller 43 controls the actuator structure 44 to drive the optical path folding element 10 to move first displacement in a positive direction of a direction of the first shake compensation, where the first displacement is an absolute value of a difference between an actual movement distance of the optical path folding element 10 and the shake compensation amount. When the difference between the displacement information fed back by the displacement sensor 45 and the shake compensation amount is a negative value, the controller 43 controls the actuator structure 44 to drive the optical path folding element 10 to move the first displacement in the opposite direction of the first shake compensation.

It may be understood that, the displacement sensor 45 is disposed, so that the controller 43 implements closed-loop feedback control over driving of the actuator structure 44. This improves accurate control of the controller 43 over current displacement of the actuator structure 44, and improves image stabilization compensation accuracy.

It should be noted that, the shake process is a continuous process. During actual implementation, processes of the first shake compensation and the second shake compensation may be continuously repeatedly performed. In this way, a location of the optical path folding element 10 can be adjusted in real time, to ensure final shake compensation accuracy.

In some implementations, the actuator structure 44 may be connected to the optical path folding element 10 through a bearing, a spring plate, an SMA suspension wire, or the like.

In some implementations, an imaging frame rate of the image sensor 32 is greater than or equal to an imaging frame rate of the image sensor 31.

For example, the imaging frame rate of the image sensor 32 is greater than the imaging frame rate of the image sensor 31. For example, the imaging frame rate of the image sensor 32 may be 10 times the imaging frame rate of the image sensor 31. It may be understood that a higher frame rate of image capture indicates a higher speed of image capture. When the imaging frame rate of the image sensor 32 is greater than the imaging frame rate of the image sensor 31, the detection structure 41 may first perform image capture based on the image capture region of the image sensor 32, to obtain the first shake amount, and further, the image stabilization assembly 40 may perform image stabilization on the camera module 100, to perform image stabilization compensation on the imaging light beam, so that an image finally captured by the image sensor 31 is clear.

After the optical path element is driven to perform image stabilization, the imaging assembly 30 may capture a second output light beam to obtain a first image by using the image sensor 31. The second output light beam is a light beam after the imaging light beam sequentially passes through the optical path elements after shake compensation.

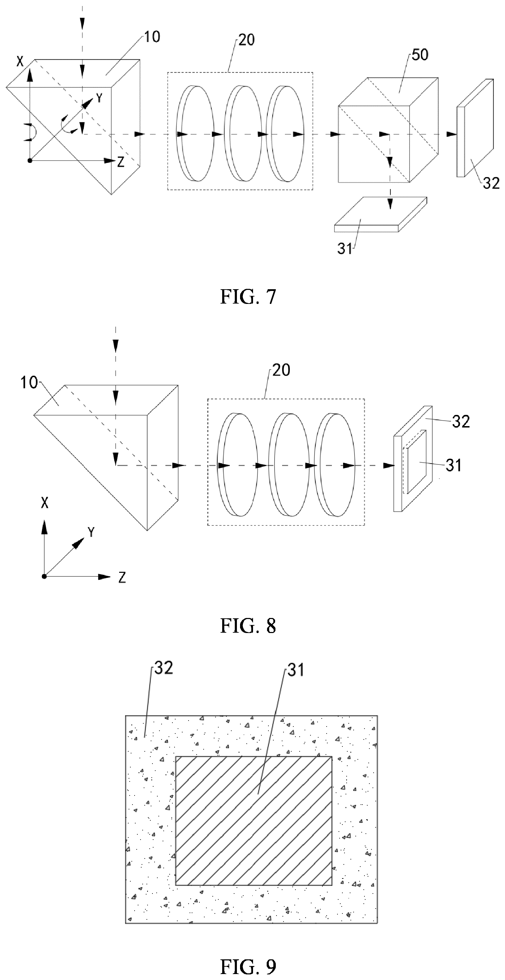

Specifically, as shown in FIG. 7, after the optical path folding element 10 performs compensation, the imaging assembly 30 may capture the second output light beam to obtain the first image by using the image sensor 31. The first image may be an image that the user needs to shoot.

In another implementation, the image stabilization assembly 40 may not be provided with the displacement sensor 45.

In some implementations, technical content that is the same as that of the camera module 100 in the foregoing implementations is not described herein again. FIG. 8 is an exploded view of a partial structure of the camera module 100 shown in FIG. 2 in another implementation.

As shown in FIG. 8, both the image sensor 31 and the image sensor 32 may be located on a light exit side of the lens group 20. The image sensor 31 is connected to the image sensor 32. An image capture surface of the image sensor 31 and an image capture surface of the image sensor 32 are disposed facing the lens group 20. In this way, the camera module 100 may not be provided with the optical splitting element 50, so that the volume of the camera module 100 can be further reduced.

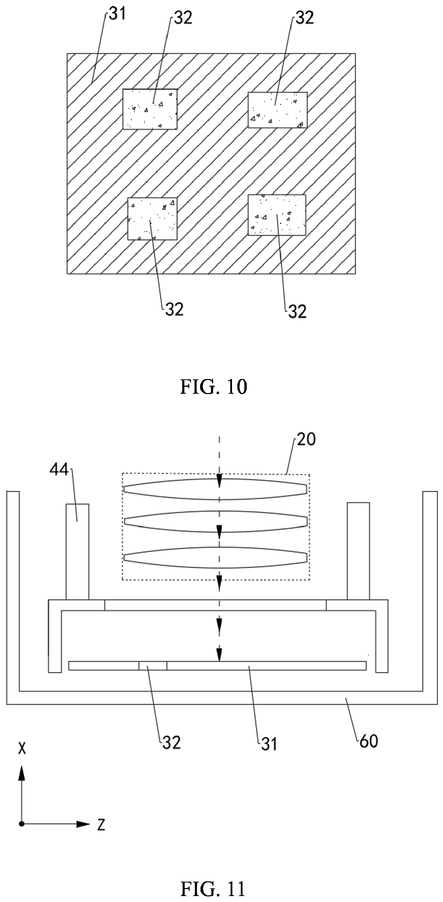

FIG. 9 is an assembly diagram of the image sensor 31 and the image sensor 32 in an implementation. FIG. 10 is an assembly diagram of the image sensor 31 and the image sensor 32 in another implementation. In FIG. 9 and FIG. 10, the image sensor 31 and the image sensor 32 are schematically distinguished using filling patterns.

As shown in FIG. 9, the image sensor 32 may be disposed around the image sensor 31. As shown in FIG. 10, the image sensor 32 may be embedded in the image sensor 31. To ensure imaging quality, the image sensor 32 may be deployed at an edge of the image sensor 31, or occupy a small location in the image sensor 31. It may be understood that a manner of disposing the image sensor 31 and the image sensor 32 may be designed according to an actual requirement. This is not limited in this application.

There may be one or more image sensors 32. For example, FIG. 10 shows that four image sensors 32 are spaced from each other.

In some implementations, technical content that is the same as that of the camera module 100 in the foregoing implementations is not described herein again. FIG. 11 is a diagram of a structure of the camera module 100 shown in FIG. 2 in another implementation.

FIG. 11 is a partial exploded view of the camera module 100 in another implementation. The camera module 100 in FIG. 11 is a vertical camera module. In comparison with the periscope camera module, the vertical camera module 100 may not be provided with the optical path folding element 10, but functions of other components are similar to functions of components of the periscope camera module.

In other words, the camera module 100 may be a common camera module 100, and an optical axis direction of the camera module 100 is the thickness direction of the electronic device 1000, that is, the X-axis direction.

For example, the camera module 100 may include a housing 60, a lens group 20, an imaging assembly 30, and an image stabilization assembly 40. The lens group 20 may form an optical element of the camera module 100. The image stabilization assembly 40 may include a detection structure 41, a detection structure 42, a controller 43, an actuator structure 44, and a displacement sensor 45. The imaging assembly 30 may include an image sensor 31 and an image sensor 32.

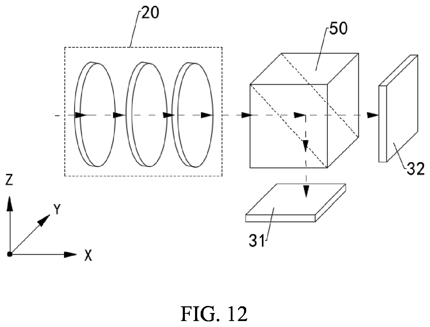

For example, as shown in FIG. 12, an optical element of the vertical camera module may also include the foregoing optical splitting element 50. For detailed descriptions of the optical splitting element 50, refer to the foregoing descriptions of the optical splitting element 50. Details are not described herein again.

For example, light outside the electronic device 1000 may directly enter the lens group 20, and be transmitted to the imaging assembly 30 after passing through the lens group 20. In some implementations, the controller 43 may drive the actuator structure 44 to move the lens group 20, to implement image stabilization compensation.

In conclusion, in a current optical image stabilization technology, there is a problem that a shake cannot be completely eliminated by using an algorithm due to a cumulative error caused by a physical limitation of a sensor. In the camera module provided in embodiments of this application, an imaging sensor (that is, an image sensor) is added, and different imaging features of two imaging sensors in the camera module are used to optimize motion compensation residual calculation, to resolve problems of image blurring and no information feedback from an imaging sensor in a low-light or long-exposure condition, and form a full-link closed-loop image stabilization framework, so as to improve image stabilization performance.

This application provides a computer storage medium. The computer storage medium stores a computer program. When the computer program is executed by a processor, any one of the foregoing image stabilization methods is implemented.

An embodiment of this application provides an electronic device. The electronic device includes a processor, and the processor is configured to support the electronic device in implementing corresponding functions in any one of the foregoing image stabilization methods. The electronic device may further include a memory. The memory is configured to be coupled to the processor, and the memory stores program instructions and data that are necessary for the electronic device. The electronic device may further include a communication interface, used for communication between the electronic device and another device or a communication network.

This application provides a chip system. The chip system includes a processor configured to support an electronic device in implementing the foregoing functions, for example, generating or processing information in the foregoing image stabilization method. In a possible design, the chip system further includes a memory, and the memory is configured to store program instructions and data that are necessary for the electronic device. The chip system may include a chip, or may include a chip and another discrete component.

This application provides a computer program. The computer program includes instructions. When the computer program is executed by a computer, the computer is enabled to perform the foregoing image stabilization method.

In the foregoing embodiments, the descriptions of embodiments have respective focuses. For a part that is not described in detail in an embodiment, refer to related descriptions of another embodiment.

It should be noted that, for brief description, the foregoing method embodiments are represented as a series of actions. However, a person skilled in the art should appreciate that this application is not limited to the described sequence of the actions, because according to this application, some steps may be performed in another sequence or simultaneously. It should be further appreciated by a person skilled in the art that embodiments described in the specification are all preferred embodiments, and the involved actions and modules are not necessarily required by this application.

In the several embodiments provided in this application, it should be understood that the disclosed apparatus may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form or other forms.

The foregoing units described as separate parts may or may not be physically separate, and parts displayed as units may or may not be physical units, may be located in one place, or may be distributed on a plurality of network units. Some or all of the units may be selected according to an actual requirement to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of software functional unit.

When the integrated unit is implemented in the form of software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of software product. The computer software product is stored in a storage medium and includes several instructions for instructing a computer device (which may be a personal computer, a server, a network device, or the like, and may be specifically a processor in the computer device) to perform all or some of the steps of the methods in embodiments of this application. The foregoing storage medium may include any medium that can store program code, such as a USB flash drive, a removable hard disk, a magnetic disk, an optical disc, a read-only memory (Read-Only Memory, ROM), or a random access memory (Random Access Memory, RAM).

The foregoing embodiments are merely intended to describe the technical solutions of this application, but are not intended to limit this application. Although this application is described in detail with reference to the foregoing embodiments, a person of ordinary skill in the art should understand that the technical solutions described in the foregoing embodiments may still be modified or some technical features thereof may be equivalently replaced, without departing from the spirit and scope of the technical solutions of embodiments of this application.

## Claims

1. A camera module, wherein the camera module comprises an image stabilization assembly, and one or more optical path elements and an imaging assembly that are sequentially arranged in a light beam transmission direction, the imaging assembly comprises a first image sensor and a second image sensor, and the image stabilization assembly is connected to at least one of the one or more optical path elements;
the first image sensor is configured to detect a first shake amount of the camera module;
the image stabilization assembly is configured to drive, based on the first shake amount, the at least one of the one or more optical path elements to perform shake compensation; and
the second image sensor is configured to perform optical imaging.

2. The camera module according to claim 1, wherein the first image sensor is specifically configured to capture a first output light beam, wherein the first output light beam is a light beam after an input light beam passes through the one or more optical path elements;
the image stabilization assembly comprises a controller and an actuator structure, and the image stabilization assembly is specifically configured to: determine the first shake amount between the input light beam and the first output light beam and determine a first shake compensation amount for the first shake amount by using the controller, and drive, by using the actuator structure, the at least one of the one or more optical path elements to perform shake compensation of the first shake compensation amount; and
the second image sensor is specifically configured to capture a second output light beam to obtain a first image, wherein the second output light beam is a light beam after the input light beam passes through the one or more optical path elements after shake compensation.

3. The camera module according to claim 2, wherein the one or more optical path elements comprise an optical splitting element and a lens group, the optical splitting element is located between the lens group and the imaging assembly, the first image sensor and the second image sensor in the imaging assembly are disposed on two sides of the optical splitting element, and the optical splitting element is configured to:
split the input light beam passing through the lens group.

4. The camera module according to claim 3, wherein the optical splitting element comprises a first optical splitting surface, and the optical splitting element is specifically configured to split, by using the first optical splitting surface according to band, the input light beam passing through the lens group.

5. The camera module according to claim 3, wherein the optical splitting element comprises a second optical splitting surface, and the optical splitting element is specifically configured to split, by using the second optical splitting surface according to a light beam proportion, the input light beam passing through the lens group.

6. The camera module according to claim 1 or 2, wherein the first image sensor and the second image sensor are located on a light exit side of at least one of the one or more optical path elements, and the first image sensor is connected to the second image sensor.

7. The camera module according to claim 1 or 2, wherein the first image sensor and the second image sensor are located on a light exit side of at least one of the one or more optical path elements, and the first image sensor is embedded in the second image sensor.

8. The camera module according to any one of claims 1 to 7, wherein an imaging frame rate of the first image sensor is greater than an imaging frame rate of the second image sensor.

9. The camera module according to any one of claims 1 to 8, wherein the controller is configured to:
obtain a second shake amount and determine the first shake compensation amount based on the first shake amount and the second shake amount.

10. The camera module according to any one of claims 2 to 9, wherein the image stabilization assembly further comprises a displacement sensor, the displacement sensor is connected to the actuator structure, and the image stabilization assembly is further configured to:
when driving the optical path element to perform shake compensation, send location information of the optical path element to the controller by using the displacement sensor, wherein the location information comprises linear displacement information or angular movement information of the optical path element;
determine a second shake compensation amount for the optical path element based on the location information by using the controller; and
drive, by using the actuator structure, the optical path element again to perform shake compensation of the second shake compensation amount.

11. The camera module according to any one of claims 2 to 10, wherein the one or more optical path elements comprise the lens group, the image stabilization assembly is connected to the lens group, and the image stabilization assembly is specifically configured to drive, by using the actuator structure, the lens group to perform shake compensation of the first shake compensation amount.

12. The camera module according to any one of claims 2 to 10, wherein the one or more optical path elements comprise an optical path folding element, the image stabilization assembly is connected to the optical path folding element, and the image stabilization assembly is specifically configured to drive, by using the actuator structure, the optical path folding element to perform shake compensation of the first shake compensation amount.

13. An electronic device, wherein the electronic device comprises the camera module according to any one of claims 1 to 12 and a first detection unit, and the first detection unit is configured to:
determine the first shake amount based on the first output light beam captured by the first image sensor.

14. The electronic device according to claim 13, wherein the first detection unit is specifically configured to:
obtain a first image set based on the first output light beam, wherein the first image set comprises at least two frames of consecutive images;
determine feature point sets of two adjacent frames of images from the first image set;
establish a matching relationship between feature points in the feature point sets of the two adjacent frames of images based on the feature point sets; and
determine the first shake amount based on the matching relationship.

15. The electronic device according to claim 13 or 14, wherein the electronic device further comprises a second detection unit, and the second detection unit is configured to:
obtain a shake signal and determine the second shake amount based on the shake signal, wherein the shake signal comprises a current angular velocity and/or a current acceleration of the electronic device, and the second shake amount comprises a shake angle or shake displacement information.

16. An image stabilization method, applied to an electronic device, wherein the electronic device comprises a camera module, the camera module comprises an image stabilization assembly, and one or more optical path elements and an imaging assembly that are sequentially arranged in a light beam transmission direction, the imaging assembly comprises a first image sensor and a second image sensor, the image stabilization assembly is connected to at least one of the one or more optical path elements, and the method comprises:
detecting a first shake amount of the camera module by using the first image sensor;
driving, by using the image stabilization assembly based on the first shake amount, the at least one of the one or more optical path elements to perform shake compensation; and
performing optical imaging by using the second image sensor.

17. The method according to claim 16, wherein the image stabilization assembly comprises a controller and an actuator structure, and detecting the first shake amount of the camera module by using the first image sensor comprises:
capturing a first output light beam by using the first image sensor, wherein the first output light beam is a light beam after an input light beam passes through the one or more optical path elements; and
determining the first shake amount between the input light beam and the first output light beam and determining a first shake compensation amount for the first shake amount by using the controller;
driving, by using the image stabilization assembly based on the first shake amount, the at least one of the one or more optical path elements to perform shake compensation comprises:
driving, by using the actuator structure, the at least one of the one or more optical path elements to perform shake compensation of the first shake compensation amount; and
performing optical imaging by using the second image sensor comprises:
capturing a second output light beam to obtain a first image by using the second image sensor, wherein the second output light beam is a light beam after the input light beam passes through the one or more optical path elements after shake compensation.

18. The method according to claim 17, wherein the electronic device further comprises a first detection unit, and the method further comprises:
determining the first shake amount by using the first detection unit based on the first output light beam captured by the first image sensor.

19. The method according to claim 18, wherein determining the first shake amount by using the first detection unit based on the first output light beam captured by the first image sensor comprises:
obtaining a first image set based on the first output light beam, wherein the first image set comprises at least two frames of consecutive images;
determining feature point sets of two adjacent frames of images from the first image set;
establishing a matching relationship between feature points in the feature point sets of the two adjacent frames of images based on the feature point sets; and
determining the first shake amount based on the matching relationship.

20. The method according to claims 16 to 19, wherein the electronic device further comprises a second detection unit, and the method further comprises:
obtaining a shake signal and determining a second shake amount based on the shake signal by using the second detection unit, wherein the shake signal comprises a current angular velocity and/or a current acceleration of the electronic device, and the second shake amount comprises a shake angle or shake displacement information.

21. The method according to claim 20, wherein determining the first shake compensation amount for the first shake amount comprises:
obtaining the second shake amount and determining the first shake compensation amount based on the first shake amount and the second shake amount by using the controller.

22. An electronic device, comprising a memory and one or more processors, wherein the memory is coupled to the one or more processors, the memory is configured to store computer program code, the computer program code comprises computer instructions, and the one or more processors invoke the computer instructions to enable the electronic device to perform the method according to any one of claims 16 to 21.

23. A chip system, wherein the chip system comprises at least one processor, a memory, and an interface circuit, the memory, the interface circuit, and the at least one processor are interconnected through a line, the at least one memory stores instructions, and when the instructions are executed by the processor, the method according to any one of claims 16 to 21 is implemented.

24. A computer-readable storage medium, comprising instructions, wherein when the instructions are run on an electronic device, the electronic device is enabled to perform the method according to any one of claims 16 to 21.

25. A computer program product, wherein the computer program product comprises computer instructions, and when the computer instructions are run on an electronic device, the electronic device is enabled to perform the method according to any one of claims 16 to 21.
